(19) Europäisches Patentamt
European Patent Office
Office européen des brevets

(11) **EP 2 039 094 B1**

(12) **FASCICULE DE BREVET EUROPEEN**

(45) Date de publication et mention
de la délivrance du brevet:
**27.06.2012 Bulletin 2012/26**

(21) Numéro de dépôt: **07823562.9**

(22) Date de dépôt: **11.07.2007**

(51) Int Cl.:
*H04L 25/02* (2006.01)      *H04L 27/26* (2006.01)

(86) Numéro de dépôt international:
**PCT/FR2007/051640**

(87) Numéro de publication internationale:
**WO 2008/007020 (17.01.2008 Gazette 2008/03)**

(54) **Procédés d'emission et de recéption d'un signal multiporteuse comprenant des pilotes isolés, dispositifs et produits programme d'ordinateur correspondants**

Verfahren zum Senden und Empfangen eines Mehrträgersignals mit isolierten Piloten sowie entsprechende Geräte und Computerprogramme

Methods for the transmission and reception of a multicarrier signal comprising isolated pilots, and corresponding devices and computer program products

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **12.07.2006 FR 0606379**

(43) Date de publication de la demande:
**25.03.2009 Bulletin 2009/13**

(73) Titulaire: **FRANCE TELECOM**
**75015 Paris (FR)**

(72) Inventeurs:
• **LELE, Chrislin**
  **F-35136 Saint Jacques (FR)**
• **JAVAUDIN, Jean-Philippe**
  **F-35000 Rennes (FR)**
• **SIOHAN, Pierre**
  **F-35200 Rennes (FR)**

(74) Mandataire: **Bioret, Ludovic**
**Cabinet Vidon**
**16 B, rue de Jouanet - B.P. 90333**
**35703 Rennes Cedex 07 (FR)**

(56) Documents cités:
**EP-A- 1 608 094     FR-A1- 2 831 359**

• **JAVAUDIN J-P ET AL: "Pilot-aided channel estimation for OFDM/OQAM" VTC 2003-SPRING. THE 57TH. IEEE SEMIANNUAL VEHICULAR TECHNOLOGY CONFERENCE. PROCEEDINGS. JEJU, KOREA, APRIL 22 - 25, 2003, IEEE VEHICULAR TECHNOLGY CONFERENCE, NEW YORK, NY : IEEE, US, vol. VOL. 4 OF 4. CONF. 57, 22 avril 2003 (2003-04-22), pages 1581-1585, XP010862427 ISBN: 0-7803-7757-5**

**Description**

**1. Domaine de l'invention**

Le domaine de l'invention est celui de la transmission et de la diffusion d'informations numériques, notamment à haut débit, sur une bande de fréquence limitée.

Plus précisément, l'invention concerne une technique d'émission et de réception d'un signal à porteuses multiples permettant d'améliorer, en réception, une estimation du canal de transmission, par exemple en environnement radiomobile.

Notamment, la technique selon l'invention est bien adaptée à la transmission de signaux à porteuses multiples ayant subi une modulation de type OFDM/OQAM (en anglais « Orthogonal Frequency Division Multiplexing /Offset Quadrature Amplitude Modulation ») ou BFDM/OQAM (en anglais « Biorthogonal Frequency Division Multiplexing / OQAM »), pour lesquelles les porteuses sont mises en forme par une fonction prototype.

**2. Art antérieur**

**2.1 Les modulations multiporteuses**

*2.1.1 Les modulations OFDM*

On connaît à ce jour les modulations à porteuses multiples de type OFDM (en anglais « Orthogonally Frequency Division Multiplex »). Une telle technique de modulation apporte une solution efficace au problème de la diffusion d'informations, en particulier pour des canaux multi-trajets, filaires ou sans fil.

De ce fait, la technique de modulation multiporteuse OFDM a été retenue dans plusieurs normes et spécifications pour des applications en transmission filaires, par exemple de type ADSL (en anglais « Asymmetric Digital Subscriber Line ») ou PLC (en anglais « Powerline Communication », en français « courant porteur en ligne » ou CPL), ou sans fil, par exemple de type DAB (en anglais « Digital Audio Broadcasting »), DVB-T (en anglais « Digital Video Broadcasting-Terrestrial »), ou WLAN (en anglais « Wireless Local Area Network »).

Toutefois, la mise en forme rectangulaire d'un signal réalisée par un modulateur OFDM présente l'inconvénient d'une mauvaise localisation fréquentielle.

Par conséquent, des solutions alternatives ont été proposées, aboutissant à des systèmes de modulation à porteuses multiples dans lesquelles le signal est mis en forme par des fonctions dites prototypes, permettant d'obtenir une meilleure localisation fréquentielle.

En effet, l'ensemble des porteuses d'une modulation multiporteuse forme un multiplex, et chacune des porteuses de ce multiplex peut être mise en forme à l'aide d'une même fonction prototype, notée *g(t)*, qui caractérise la modulation multiporteuse.

*2.1.2 Les modulations OFDM/OQAM*

Ainsi, une solution proposée consiste à remplacer une modulation en quadrature QAM (« Quadrature Amplitude Modulation »), mise en oeuvre sur chacune des porteuses, par une modulation décalant d'un demi temps symbole les parties réelles et imaginaires des symboles complexes à transmettre, pour deux fréquences porteuses successives.

Cette alternance conduit à une modulation multiporteuse de type OFDM/OQAM. Cette approche permet notamment de réaliser les conditions d'orthogonalité désirées avec des filtres prototypes qui ne sont pas nécessairement de forme rectangulaire.

En effet, le décalage (offset temporel) introduit par la modulation OQAM permet de relâcher les contraintes d'orthogonalité, ou plus généralement de biorthogonalité. Cette famille de modulation offre ainsi un choix de fonctions prototypes plus large que la simple fonction prototype rectangulaire d'une modulation OFDM.

Ainsi, suivant le type de canal de transmission considéré pour une application donnée, comme par exemple le canal radiomobile ou le canal à courant porteur en ligne (CPL), on peut effectuer un choix de fonctions prototypes appropriées aux types de distorsions rencontrées. En particulier, il est préférable de retenir des fonctions prototypes présentant une meilleure sélectivité fréquentielle que le sinus cardinal utilisé en modulation OFDM, notamment en canal radiomobile pour lutter contre la dispersion fréquentielle due à l'effet Doppler, ou en canal CPL pour mieux résister aux brouilleurs à bande étroite, et de manière générale pour satisfaire plus aisément les spécifications fréquentielles des masques d'émission.

La modulation OFDM/OQAM est donc une alternative à la modulation OFDM classique, reposant sur un choix judicieux de la fonction prototype modulant chacune des porteuses du signal, qui doit être bien localisée dans l'espace temps/fréquence.

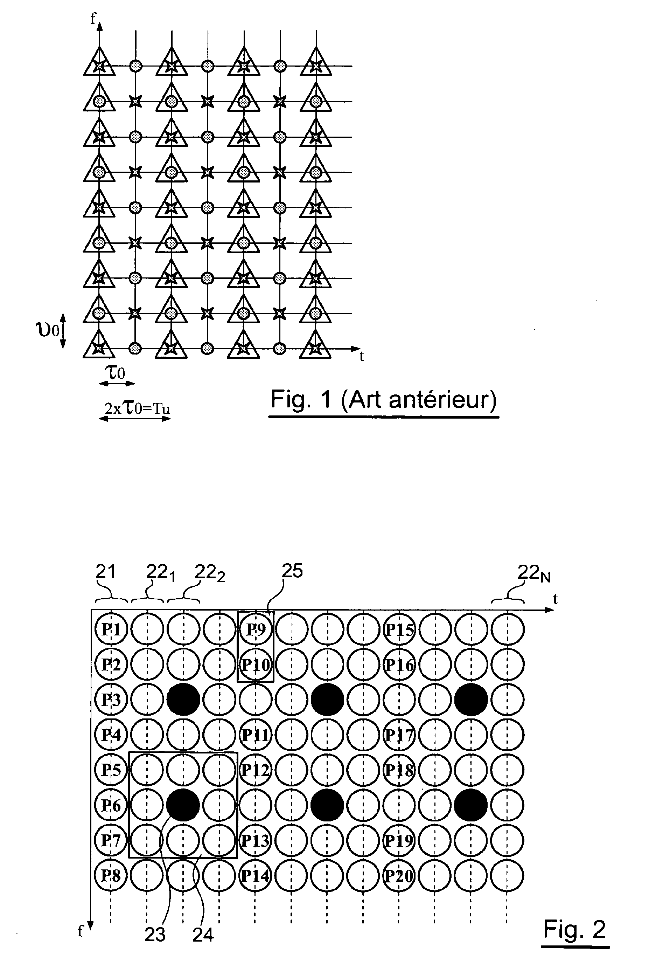

En particulier, la figure 1 illustre une représentation temps/fréquence des éléments de données à valeurs réelles transmis par modulation OFDM/OQAM et des éléments de données à valeurs complexes transmis par modulation OFDM classique, sans intervalle de garde, un symbole à valeurs complexes OFDM/QAM ou à valeurs réelles OFDM/ OQAM étant constitué d'un ensemble d'éléments de données à un instant t donné. De plus, chaque emplacement temps/fréquence porte une fréquence porteuse, appelée sous-porteuse ou directement porteuse dans la suite de la description.

Sur cette figure 1, les triangles à un instant t donné représentent les éléments de données à valeurs complexes d'un symbole OFDM/QAM. Les ronds et les étoiles à un instant t donné représentent quant à eux les éléments de données à valeurs réelles d'un symbole OFDM/OQAM. Par exemple, pour deux symboles OFDM/OQAM successifs à valeurs réelles, les ronds correspondent à la partie réelle et les étoiles à la partie imaginaire d'un symbole complexe issu d'une constellation QAM que l'on souhaite transmettre en utilisant une modulation OFDM/OQAM.

En effet, pour une modulation OFDM classique de type complexe, les parties réelle et imaginaire d'un complexe issu de la constellation QAM sont transmises simultanément, tous les temps symbole $T_u$ ; dans le cadre d'une modulation OFDM/OQAM de type réel, en revanche, les parties réelle et imaginaire sont transmises avec un décalage temporel d'un demi temps symbole complexe ($T_u/2$).

On constate sur cette figure 1 que l'efficacité spectrale de l'OFDM/OQAM est identique à celle de l'OFDM classique sans intervalle de garde. En effet, en notant $\nu_0$ l'espacement entre deux porteuses adjacentes du multiplex, et $\tau_0$ l'espacement temporel entre deux symboles à valeurs réelles, on transmet pour un même espacement inter-porteuses $\nu_0$ :

- en OFDM/OQAM, une valeur réelle par porteuse tous les intervalles de temps $\tau_0$ ;
- en OFDM classique sans intervalle de garde, une valeur complexe (i.e. deux valeurs réelles) tous les $2 \times \tau_0 = T_u$.

Autrement dit, l'efficacité spectrale de l'OFDM/OQAM est $(T_g + 2\tau_0) / 2\tau_0$ fois supérieure à celle de l'OFDM classique avec un intervalle de garde de durée $T_g$.

*2.1.3 Les modulations BFDM/OQAM*

De plus, si l'on choisit d'avoir côté réception des fonctions de démodulation qui ne sont pas nécessairement les fonctions conjuguées des fonctions prototypes utilisées en émission, on peut, en utilisant la propriété de biorthogonalité, généraliser l'OFDM/OQAM à la technique de modulation BFDM/OQAM.

Le principe d'offset, lié à la famille OQAM, est strictement identique dans le cadre d'une modulation de type BFDM/OQAM. Par conséquent, la figure 1 s'applique également aux modulations de type BFDM/OQAM.

Plus précisément, l'intérêt de la modulation de type BFDM/OQAM est de permettre, pour une longueur donnée de filtre prototype, une réduction du retard apporté par le système de transmission.

Comme indiqué précédemment, la technique de modulation BFDM/OQAM, tout comme l'OFDM/OQAM, transmet des symboles à valeur réelle à une cadence double de celle à laquelle l'OFDM transmet des symboles à valeur complexe. Par conséquent, ces deux modulations ont a priori la même efficacité spectrale.

Plus précisément, le signal BFDM/OQAM peut se représenter en bande de base sous la forme suivante :

$$s(t) = \sum_n \sum_{m=0}^{M-1} a_{m,n} \underbrace{g(t - n\tau_0) e^{j2\pi m\nu_0 t} e^{j\phi_{m,n}}}_{g_{m,n}(t)} \qquad (1),$$

avec :

- $a_{m,n}$ les éléments de données réels à transmettre sur une porteuse $m$ à l'instant $n$ ;
- $M$ le nombre de fréquences porteuses (nécessairement pair) ;
- $g$ la fonction prototype utilisée par le modulateur ;
- $\tau_0$ la durée d'un symbole BFDM/OQAM ;
- $\nu_0$ l'espacement inter porteuses ;
- $\phi_{m,n}$ un terme de phase choisi de manière à réaliser une alternance partie réelle-partie imaginaire permettant l'orthogonalité, ou plus généralement la biorthogonalité.

En effet, dans le cas biorthogonal, la base de démodulation à la réception peut être différente de celle de l'émission, et peut s'exprimer sous la forme suivante :

$$f_{m,n}(t) = f\left(t - n\tau_0\right)e^{j2\pi m v_0 t}e^{j\phi_{m,n}} \qquad (2)$$

La condition de biorthogonalité s'exprime alors sous la forme suivante :

$$\left\langle g_{m,n}, f_{m',n'}\right\rangle_R = \Re\left\{\int_{-\infty}^{\infty} \tilde{g}_{m,n}(t)\hat{f}_{m',n'}^{*}(t)dt\right\} = \delta_{m,m'}\delta_{n,n'} \qquad (3)$$

où : $(.,.)_R$ désigne le produit scalaire réel, et R {.} désigne le partie réelle.

Cependant un inconvénient des techniques de modulation de type BFDM/OQAM (ou OFDM/OQAM), est que la condition de biorthogonalité (ou d'orthogonalité) n'est réalisée que pour les valeurs réelles de symboles à transmettre, ce qui pose un problème d'estimation en réception, et notamment d'estimation du canal de transmission, dans la mesure où les symboles reçus sont complexes.

### 2.2 Le canal de transmission

On décrit donc succinctement ci-après les caractéristiques d'un canal de transmission, notamment en environnement radiomobile, et les techniques d'estimation d'un tel canal. On rappelle en effet que le procédé de mise en forme d'un signal électrique à partir de l'information à transmettre dépend des conditions dans lesquelles un tel signal est transmis.

*2.2.1 Caractéristiques du canal de transmission*

En environnement radiomobile, l'onde émise subit, lors de son parcours, de multiples réflexions, et le récepteur reçoit donc une somme de versions retardées du signal émis. Chacune de ces versions est atténuée et déphasée de façon aléatoire. Ce phénomène, connu sous le nom d'étalement des retards (en anglais « delay spread »), génère de l'interférence entre symboles (IES). On entend notamment par IES une interférence entre symboles temporels et/ou entre porteuses. Par exemple, dans un environnement de type urbain, l'étalement des retards est de l'ordre de ou inférieur à quelques microsecondes.

Le récepteur (par exemple un radiotéléphone mobile d'un automobiliste) étant supposé en mouvement, l'effet dit Doppler agit également sur chaque trajet, ce qui se traduit par un décalage en fréquence du spectre reçu, proportionnel à la vitesse de déplacement du mobile.

La conjugaison de ces effets se traduit par un canal non stationnaire présentant des évanouissements profonds à certaines fréquences. Un tel canal est notamment qualifié de canal sélectif en fréquence. Pour certaines applications, particulièrement intéressantes dans le cadre de la présente invention, la bande de transmission est de largeur supérieure à la bande de cohérence du canal (c'est-à-dire à la bande pour laquelle la réponse fréquentielle du canal peut être considérée comme constante, sur une durée donnée). Des évanouissements apparaissent donc dans la bande, c'est-à-dire qu'à un instant donné, certaines fréquences sont fortement atténuées.

Pour combattre ces différents phénomènes (dus à l'IES et à l'effet Doppler), on a envisagé dans les systèmes de type OFDM d'ajouter un intervalle de garde, pendant lequel on ne transmet pas d'informations utiles, de manière à garantir que toutes les informations reçues proviennent d'un même symbole. Dans le cas d'une démodulation cohérente des sous-porteuses, on corrige alors la distorsion apportée par le canal en estimant sa valeur en tout point du réseau temps/fréquence.

L'introduction d'un tel intervalle de garde permet ainsi de réduire les phénomènes liés à l'interférence entre symboles.

Toutefois, un inconvénient majeur de cette technique est qu'elle est d'efficacité spectrale réduite, aucune information utile n'étant transmise pendant la durée de l'intervalle de garde.

En revanche, les techniques de modulation de type OFDM/OQAM et BFDM/OQAM, ne nécessitent pas l'introduction d'un intervalle de garde ou d'un préfixe cyclique, tout en présentant la même efficacité spectrale qu'une modulation OFDM classique.

*2.2.2 Estimation du canal de transmission*

Les caractéristiques distinctes des modulations multiporteuses de type réel d'une part, et de type complexe d'autre part, induisent des traitements différents lors de la mise en oeuvre d'une estimation du canal de transmission.

On détaille ci-après une technique d'estimation du canal de transmission pour des modulations de type réel, par exemple OFDM/OQAM ou BFDM/OQAM. En effet, dans le cas d'une modulation multiporteuse de type réel, le fait de disposer d'une orthogonalité des translatées au sens réel rend le processus d'estimation de canal plus délicat.

En effet, pour estimer le gain complexe du canal sur une sous-porteuse donnée, il convient de réaliser la projection complexe du signal reçu sur la sous-porteuse considérée. Or, l'orthogonalité des translatées au sens réel et le fait que les fonctions prototypes, même choisies localisées au mieux en temps et en fréquence, sont de support infini sur au moins un des deux axes temporel ou fréquentiel, impliquent que, même sur un canal idéal, de l'interférence (intrinsèque) entre porteuses est générée.

En effet, la partie imaginaire de la projection du signal reçu sur la base des translatées de la fonction prototype n'est pas nulle. Il apparaît alors un terme perturbateur qui vient s'ajouter au signal démodulé, et qu'il faut corriger avant de faire l'estimation du canal. Il est donc nécessaire de concevoir des méthodes permettant de compenser cette perte d'orthogonalité complexe, et palliant ainsi au moins certains inconvénients de cette technique de l'art antérieur pour les modulations de type OFDM/OQAM ou BFDM/OQAM.

Considérons par exemple $y(t)$ le signal reçu.

On suppose notamment que le choix des paramètres de la modulation multiporteuse assure que le canal peut être considéré comme plat sur chacune des sous-porteuses pour chaque symbole OFDM/OQAM. Le canal est alors modélisable par un coefficient complexe par sous-porteuse, noté $H_{m,n}$, où $m$ est l'indice de la sous-porteuse et $n$ celui du symbole OFDM/OQAM.

On utilise alors la projection complexe du signal multiporteuse au point $(m_0,n_0)$ de l'espace temps/fréquence pour estimer le canal de transmission $\hat{H}_{m0,n0}$ à cet emplacement.

Ainsi, si on émet $a_{m0,n0} = \sqrt{E}$ à cet emplacement, on a :

$$\hat{H}_{m_0,n_0} = \frac{\int y(t) g^{*}_{m_0,n_0}(t)dt}{\sqrt{E}} \qquad (4)$$

En supposant que le canal est idéal $(y(t) = s(t))$, étant donné que les modulations OFDM/OQAM et BFDM/OQAM ont seulement une orthogonalité réelle (équation (3)), on ne peut pas avoir $\hat{H}_{m0,n0} = 1$.

Donc, considérant $a^{(c)}_{m_0,n_0} = \left\langle s, g_{m_0,n_0} \right\rangle_C = \int s(t) g^{*}_{m_0,n_0}(t)dt$ ,, et supposant que le canal est idéal, on a :

$$a^{(c)}_{m_0,n_0} = \sqrt{E} + \underbrace{\sum_{(m,n)\neq(m_0,n_0)} a_{m,n} \int g_{m,n}(t) g^{*}_{m_0,n_0}(t)dt}_{I_{m_0,n_0} \in j\Re} \qquad (5)$$

où $(.,.)_C$ désigne le produit scalaire en complexe.

L'équation (5) traduit le fait que la projection complexe du signal parfaitement transmis est néanmoins entachée d'une interférence entre symboles (IES) intrinsèque aux modulations OFDM/OQAM ou BFDM/OQAM, notée $I_{m0,n0}$.

En particulier, l'existence de cette interférence entre symboles perturbe fortement l'estimation du canal de transmission, et, par conséquent, l'estimation des symboles.

Une solution à ce problème a notamment été proposée dans le document de brevet WO 02/25884 publié le 28 mars 2002.

Plus précisément, la technique proposée dans ce document permet de limiter cette interférence en utilisant une mise en trame spécifique des données à l'émission. Ainsi, cette technique associe à des zones 3 x 3 du réseau temps/fréquence, dite première couronne, ou zones de taille supérieure, un élément de donnée de référence, appelé pilote, ainsi qu'une donnée de contrôle.

Un inconvénient de cette technique de l'art antérieur est de nécessiter un calcul matriciel à l'émission et à la réception, avec une taille de matrice augmentant avec la taille de la couronne.

Le document JAVAUDIN J-P et AL" Pilot-aided channel estimation for OFONJA VIC 2003-SPRING. The 57th. IEEE SEMIANNUAL VEHICULAR TECHNOLOGY CONFERENCE PROCEEDINGS décrit une technique d'estimation d'un canal de transmission par insertion de pilotes repartis en quinconce dans un signal OFOM/OQAM.

Un inconvénient de ces deux techniques de l'art antérieur apparaît dans le cas d'une transmission pour laquelle la ressource temps/fréquence est répartie entre plusieurs utilisateurs. Dans ce cas, la relation de couronne impose que tous les éléments de données d'une même couronne soient affectés au même utilisateur. Cette contrainte pose notamment des problèmes de granularité et d'affectation des ressources, le nombre de pilotes émis étant généralement situé entre 2 et 5%.

Il existe donc un besoin pour une technique permettant d'obtenir une meilleure estimation du canal de transmission, et conduisant à une estimation plus précise des éléments de données informatifs portés par le signal multiporteuse.

### 3. Exposé de l'invention

L'invention propose une solution nouvelle qui ne présente pas l'ensemble de ces inconvénients de l'art antérieur, sous la forme d'un procédé de réception d'un signal reçu correspondant à un signal multiporteuse émis par au moins un émetteur via un canal de transmission, ledit signal multiporteuse étant formé d'une succession temporelle de symboles constitués d'un ensemble d'éléments de données à valeurs réelles comprenant :

- des éléments de données informatifs, et
- pour au moins certains desdits symboles, des éléments de données de référence appelés pilotes, dont la valeur et l'emplacement à l'émission sont connus d'au moins un récepteur destiné à effectuer une réception dudit signal multiporteuse,

chacun desdits éléments de données modulant une fréquence porteuse dudit signal, une fréquence porteuse modulée par un desdits éléments de données étant appelée porteuse, ledit procédé de réception comprenant une étape de première estimation dudit canal de transmission.

Selon l'invention, au moins un desdits pilotes étant un pilote isolé en émission, dont les porteuses directement voisines, dans l'espace temps/fréquence, portent des éléments de données informatifs, ledit procédé de réception comprend :

- une étape d'extraction dudit pilote isolé, délivrant une valeur complexe représentative dudit pilote isolé, après passage dans ledit canal de transmission,
- une étape de raffinement local de ladite première estimation, tenant compte de ladite valeur complexe dudit pilote isolé, délivrant une estimation locale raffinée dudit canal de transmission.

Ainsi, l'invention repose sur une approche nouvelle et inventive de l'estimation du canal de transmission, dans un système de transmission mettant en oeuvre un signal multiporteuse portant des éléments de données à valeurs réelles. En particulier, un tel signal multiporteuse est du type OFDM/OQAM ou BFDM/OQAM.

Plus précisément, cette technique repose sur la mise en oeuvre, côté réception, d'une première estimation globale du canal de transmission, suivie d'un raffinement local de cette première estimation, au niveau des pilotes isolés, permettant d'obtenir une estimation plus fine du canal de transmission. Cette technique permet donc d'améliorer l'estimation du canal aux emplacements temps/fréquence des pilotes isolés.

On entend notamment par pilote isolé un élément de données de référence entouré par des éléments de données informatifs, et non des éléments de données de référence, soit autrement dit un pilote dont les porteuses directement voisines dans l'espace temps/fréquence portent des éléments de données informatifs. En particulier, ces pilotes isolés peuvent être boostés.

On rappelle également que le canal de transmission est découpé en cellules selon les axes temporel et fréquentiel. A chaque cellule ou emplacement de l'espace temps/fréquence est attribuée une porteuse dédiée. On répartit donc l'information à transporter sur l'ensemble de ces porteuses.

En particulier, ce raffinement local permet une estimation correcte du canal de transmission au niveau du pilote isolé, sans gaspiller la ressource temps/fréquence, puisqu'il n'est pas nécessaire d'imposer une contrainte sur la valeur d'un élément de données porté par une porteuse directement voisine (située dans une région appelée première couronne) du pilote isolé. Il n'est donc pas nécessaire d'imposer de relation de première couronne pour réduire l'IES.

En effet, la technique selon l'invention permet notamment, par rapport aux techniques de l'art antérieur, d'optimiser la ressource temps/fréquence, puisqu'elle ne nécessite pas l'utilisation d'un intervalle de garde, pendant lequel aucune information utile n'est transmise, ni une mise en trame spécifique des données, associant à une zone $3 \times 3$ du réseau temps/fréquence (première couronne) un pilote réel ainsi qu'une donnée de contrôle, nécessitant la réservation de deux emplacements temps/fréquence.

La première estimation peut notamment être mise en oeuvre par une technique classique d'estimation de canal, comme par exemple :

- une estimation par préambule, notamment dans le cas d'une transmission au cours de laquelle le canal varie lentement dans le temps ;
- une estimation par pilotes répartis ;
- une estimation par paires de pilotes réels ;
- une estimation par couronne, telle que décrite notamment dans le document de brevet WO 02/25884 précité ;
- une estimation en aveugle, ne reposant pas sur l'utilisation d'éléments de données de référence connus du récepteur ;
- etc.

En particulier, la technique d'estimation par paires de pilotes réels repose sur la prise en compte, dans un signal à porteuses multiples formé d'une succession temporelle de symboles constitués d'un ensemble d'éléments de données à valeurs réelles comprenant des éléments de données informatifs, et pour au moins certains symboles, des pilotes, dont la valeur et l'emplacement à l'émission sont connus d'au moins un récepteur, de groupes de pilotes localisés chacun dans une région de voisinage de l'espace temps/fréquence.

Plus précisément, on considère au moins un groupe d'au moins deux pilotes à valeurs réelles localisé dans une région dite de voisinage dans laquelle le canal de transmission est considéré comme sensiblement constant, de façon à obtenir une estimation du canal de transmission sur cette région de voisinage.

Ainsi, pour au moins une des régions de voisinage, cette technique d'estimation comprend :

- une étape d'extraction d'au moins deux valeurs complexes correspondant aux pilotes du groupe de la région de voisinage considérée, après passage dans le canal de transmission,
- une étape d'estimation des parties réelle et imaginaire du canal de transmission dans la région de voisinage considérée à partir de ces valeurs complexes.

Selon un mode de réalisation particulier, l'étape de raffinement local met en oeuvre une comparaison d'un terme d'interférence imaginaire affectant ledit pilote isolé, et une correction locale de ladite première estimation en fonction du résultat de ladite comparaison.

Notamment ladite comparaison compare :

- une interférence déterministe affectant ledit pilote isolé, correspondant à la partie imaginaire de ladite valeur complexe ; et
- une interférence estimée affectant ledit pilote isolé, déterminée à partir d'une estimation d'au moins un élément de données informatif modulant une porteuse directement voisine dudit pilote isolé dans l'espace temps/fréquence, obtenue à partir de ladite première estimation.

En effet, un récepteur destiné à recevoir le signal multiporteuse connaît la valeur réelle du pilote isolé émis. Il peut donc aisément déduire l'interférence affectant un tel pilote isolé, cette interférence dite déterministe correspondant à la partie imaginaire de la valeur complexe reçue représentative du pilote isolé après passage dans le canal de transmission.

En comparant cette interférence déterministe à une interférence estimée à partir de la première estimation, le récepteur peut déduire une nouvelle estimation du canal de transmission à l'emplacement du pilote isolé, appelée estimation locale raffinée.

De plus, cette étape de raffinement local peut tenir compte d'une fonction d'ambiguïté d'une fonction prototype associée à la modulation, par exemple OFDM/OQAM ou BFDM/OQAM.

Selon une variante de réalisation, l'estimation locale raffinée est affectée d'au moins une information de confiance.

On accorde ainsi un degré de confiance plus important à l'estimation du canal de transmission aux emplacements de l'espace temps/fréquence portant des pilotes isolés.

Selon un autre aspect de l'invention, l'étape de raffinement local est réitérée au moins une fois, une étape de raffinement local courante tenant compte du résultat d'une étape de raffinement local précédente.

Il est ainsi possible d'améliorer la boucle de turbo-estimation en tenant compte des valeurs de la fonction d'ambiguïté de la fonction prototype associée à la modulation, et de réaliser une turbo-égalisation améliorée grâce à la connaissance des pilotes isolés côté récepteur.

En particulier, l'étape de raffinement local courante tient compte de ladite information de confiance.

Selon encore un autre aspect de l'invention, la première étape d'estimation délivre une estimation de canal pour une région de l'espace temps/fréquence prédéterminée, et ladite région est découpée en au moins deux sous-régions de raffinement comprenant chacune un unique pilote isolé, ladite étape de raffinement local étant appliquée indépendamment à chacune desdites sous-régions.

Ainsi, par exemple dans le cadre d'une région du canal de transmission fortement perturbée, il est souhaitable de découper cette région en sous-régions, et de réaliser un raffinement local dans chacune des sous-régions.

Un autre mode de réalisation de l'invention concerne un dispositif de réception d'un signal reçu correspondant à un signal multiporteuse tel que décrit précédemment, émis par au moins un émetteur via un canal de transmission, ledit dispositif de réception comprenant des moyens de première estimation du canal de transmission.

Selon l'invention, au moins un desdits pilotes étant un pilote isolé en émission, un tel dispositif de réception comprend :

- des moyens d'extraction dudit pilote isolé, délivrant une valeur complexe représentative dudit pilote isolé, après passage dans ledit canal de transmission,
- des moyens de raffinement local de ladite première estimation, tenant compte de ladite valeur complexe dudit pilote isolé, délivrant une estimation locale raffinée dudit canal de transmission.

Un tel dispositif de réception est notamment adapté à mettre en oeuvre le procédé de réception décrit précédemment.

Par exemple, un tel dispositif de réception correspond ou est compris dans un terminal (radiotéléphone, ordinateur portable, PDA ...) ou dans une station de base.

autre aspect de l'invention concerne un procédé d'émission selon la revendication 10 ou selon la revendication 11

Plus précisément, ces techniques reposent respectivement sur la mise en oeuvre, côté émission, un préambule formé d'au moins un symbole constitués de pilotes ou d'au moins une paire de pilotes c'est-à-dire d'un élément de données de référence entouré par des éléments de données informatifs, et non des éléments de données de référence dans l'espace temps/fréquence.

Côté réception, on peut ainsi réaliser une première estimation du canal de transmission à partir du premier jeu d'éléments de données, comprenant des éléments de données informatifs et/ou des éléments de données de référence, suivie d'un raffinement local de cette première estimation, au niveau des pilotes isolés, à partir du deuxième jeu, comprenant des pilotes isolés (au moins un).

Un autre mode de réalisation de l'invention concerne également un dispositif d'émission selon la revendication 12 ou selon la revendication 13.

De tels dispositifs d'émission sont notamment adaptés à mettre en oeuvre respectivement les procédés d'émission décrits précédemment.

En particulier, ils sont adaptés à émettre un tel signal multiporteuse à destination du dispositif de réception décrit ci-dessus.

Par exemple, de tels dispositifs d'émission correspondent ou sont compris dans un terminal (radiotéléphone, ordinateur portable, PDA ...) ou dans une station de base.

Encore un autre aspect de l'invention concerne un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé de réception décrit précédemment, et/ou un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé d'émission décrit ci-dessus.

Finalement, un autre aspect de l'invention concerne un signal multiporteuse selon le revendication 15.

Un tel signal peut notamment représenter un signal multiporteuse émis selon le procédé d'émission décrit ci-dessus. Il peut également être reçu selon le procédé de réception décrit précédemment.

## 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- la figure 1, déjà commentée en relation avec l'art antérieur, est une représentation temps/fréquence des symboles à valeurs complexes transmis selon une modulation OFDM classique et des symboles à valeurs réelles transmis selon une modulation OFDM/OQAM de l'art antérieur ;
- la figure 2 illustre la structure d'un signal à porteuses multiples selon un mode de réalisation de l'invention ;
- la figure 3 présente les principales étapes du procédé de réception selon un mode de réalisation de l'invention ;
- les figures 4A et 4B illustrent respectivement un schéma de turbo-estimation classique, mis en oeuvre pour une modulation de type OFDM, et de turbo-estimation selon un mode de réalisation de l'invention, mis en oeuvre pour une modulation de type OFDM/OQAM ou BFDM/OQAM ;

- les figures 5A et 5B présentent respectivement la structure d'un dispositif d'émission et d'un dispositif de réception, selon un mode de réalisation particulier de l'invention.

## 5. Description d'un mode de réalisation de l'invention

Le principe général de l'invention repose sur la prise en compte de pilotes isolés, dans un signal à porteuses multiples mettant en oeuvre des éléments de données à valeurs réelles, de façon à améliorer localement une estimation du canal de transmission entre un émetteur et un récepteur, en réception.

Plus précisément, l'invention repose, selon un mode de réalisation particulier, sur la détermination d'une première estimation du canal de transmission, mise en oeuvre à partir d'une première technique d'estimation de canal, par exemple de type estimation par préambule, par pilotes répartis, par paires de pilotes réels, par couronne, en aveugle, etc, et suivie d'un raffinement local de cette première estimation, au niveau des différents pilotes isolés.

On décrit ci-après un mode de réalisation particulier de l'invention, mis en oeuvre dans le cadre d'une modulation multiporteuse de type OFDM/OQAM.

Côté émission, on insère dans le signal multiporteuse des pilotes isolés à valeurs réelles, c'est-à-dire des éléments de données de référence connus du récepteur dont les porteuses directement voisines (c'est-à-dire la première couronne entourant chaque pilote isolé) comprennent uniquement des éléments de données informatifs. Autrement dit, un pilote isolé est transmis sur une seule position du réseau temps/fréquence de densité 2 d'une modulation de type OFDM/OQAM ou BFDM/OQAM.

Plus précisément, comme illustré en relation avec la figure 2, on considère un signal multiporteuse formé d'une succession temporelle de symboles 21, $22_1$, $22_2$, ..., $22_N$, constitués d'un ensemble d'éléments de données à valeurs réelles comprenant :

- des éléments de données informatifs, correspondant aux ronds blancs vides ; et
- pour au moins certains desdits symboles, des éléments de données de référence appelés pilotes, correspondant aux ronds noirs et aux ronds blancs annotés avec la lettre P, dont la valeur et l'emplacement à l'émission sont connus d'au moins un récepteur destiné à effectuer une réception du signal multiporteuse.

Plus précisément, les ronds blancs annotés avec la lettre P sont insérés dans le signal multiporteuse de façon à permettre une première estimation du canal de transmission, en réception.

Par exemple, au moins un symbole de référence 21, comprenant les pilotes P1 à P8, est inséré dans le signal multiporteuse en début de trame, une trame étant formée d'un ensemble d'au moins un symbole de référence appelé préambule et d'un ensemble de symboles utiles $22_1$ à $22_N$, de façon à permettre, en réception, une première estimation par préambule.

Selon une variante de réalisation, les paires de pilotes réels P2n et P2n+1, par exemple la paire 25, sont ajoutées dans le signal multiporteuse, à la place du préambule 21 ou conjointement au préambule 21, de façon à permettre, en réception, une première estimation par paires de pilotes réels.

En particulier, la ou les paires de pilotes sont localisées dans une région de voisinage dans laquelle le canal de transmission est considéré comme invariant. Ainsi, les pilotes de ces paires sont répartis en temps et/ou en fréquence, selon que le canal est considéré comme sensiblement constant en temps et/ou en fréquence.

Les ronds noirs correspondent à des pilotes isolés, insérés dans la trame de données. Par définition, la couronne 24 entourant un pilote isolé 23 comprend uniquement des ronds blancs, c'est-à-dire des éléments de données informatifs.

Ces pilotes isolés sont insérés de façon à permettre un raffinement local de la première estimation du canal de transmission, aux emplacements temps/fréquence des pilotes isolés.

Ainsi, le procédé d'émission met en oeuvre au moins deux jeux d'éléments de données, un premier jeu permettant de déterminer une première estimation du canal de transmission, comprenant un préambule ou des paires de pilotes réels selon ce mode de réalisation, et un deuxième jeu permettant d'améliorer localement la première estimation, comprenant des pilotes isolés selon ce mode de réalisation.

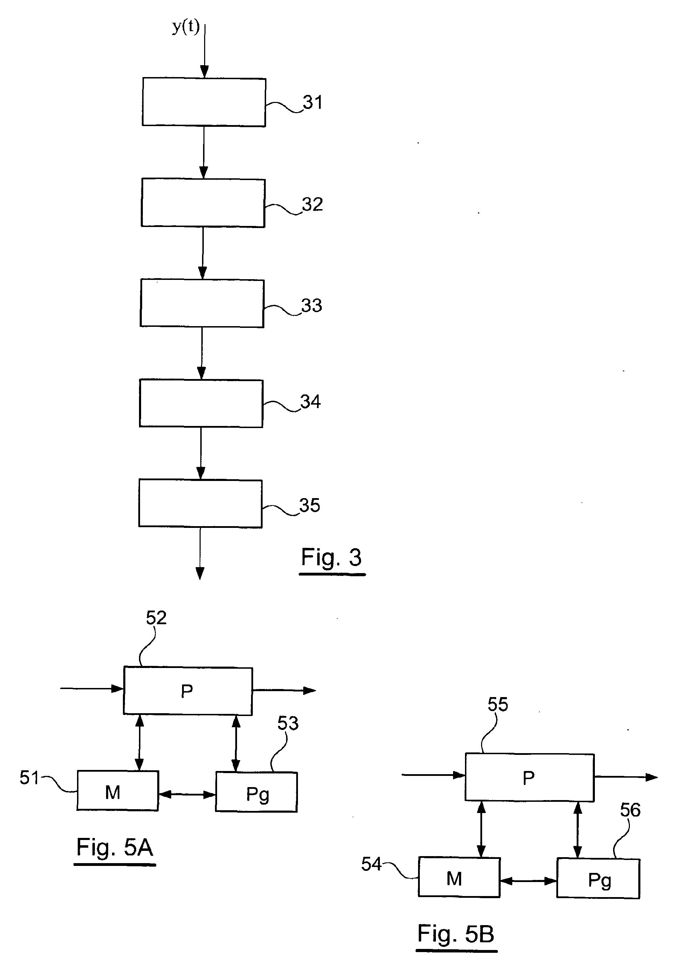

Côté réception, comme illustré en relation avec la figure 3, on effectue une première estimation 31 du canal de transmission à partir du signal reçu y(t) , en mettant par exemple en oeuvre une estimation par préambule, ou par pilotes répartis suivie d'une interpolation.

On égalise 32 ensuite le signal reçu autour des pilotes isolés, c'est-à-dire au niveau des emplacements temps/fréquence portant des éléments de données informatifs.

Au cours d'une étape suivante 33, on extrait les pilotes isolés. On obtient ainsi les valeurs complexes représentatives des pilotes isolés, après passage dans le canal de transmission.

On effectue ensuite un raffinement local 34 de la première estimation au niveau d'au moins un pilote isolé. Pour ce faire, on compare, pour un pilote isolé :

- une interférence déterministe affectant ce pilote isolé, correspondant à la partie imaginaire de sa valeur complexe, et
- une interférence estimée affectant ce pilote isolé, déterminée à partir d'une estimation des éléments de données entourant ce pilote (par exemple les éléments de données informatifs de la couronne 24), elle-même déterminée à partir de la première estimation de canal.

On obtient ainsi une ré-estimation du canal de transmission, encore appelée estimation locale raffinée, aux emplacements temps/fréquence des pilotes isolés, par simple division selon ce mode particulier de réalisation.

En combinant ces estimations locales raffinées à la première estimation, on obtient une estimation améliorée du canal de transmission.

Au cours d'une étape suivante 35, on peut égaliser le signal reçu à partir de l'estimation améliorée du canal de transmission, le désentrelacer, et le décoder.

On décrit ci-après un exemple de mise en oeuvre de la technique de réception selon ce mode de réalisation particulier de l'invention, dans le cadre d'une modulation de type BFDM/OQAM.

Plus précisément, le signal reçu y(t) peut s'écrire sous la forme :

$$ y(t) = \sum_n \sum_{m=0}^{M-1} H_{m,n}^{(c)} a_{m,n} g_{m,n}(t) + b(t) \qquad (6), $$

avec $H_{m,n}^{(c)}$ les coefficients complexes représentatifs du canal de transmission à chaque emplacement temps/fréquence, avec $m$ l'indice fréquentiel et $n$ l'indice temporel, et $b(t)$ la composante de bruit.

Comme déjà précisé pour les modulations de type OFDM/OQAM, le signal émis et le canal de transmission étant modélisés en bande de base par des nombres complexes, le coefficient $a_{m_0,n_0}^{(c)}$ à estimer en réception pour chaque emplacement $(m_0,n_0)$ du réseau temps/fréquence est également un nombre complexe.

En supposant également que le canal est approximativement constant sur une région donnée de l'espace temps/fréquence, du fait de la biorthogonalité de la paire de fonctions $(f,g)$ décrite en relation avec l'équation (3), le signal reçu sur la porteuse $m_0$ à l'instant $n_0$ est estimé par :

$$ y_{m_0,n_0}^{(c)} = \left\langle s, f_{m_0,n_0} \right\rangle_C $$

$$ y_{m_0,n_0}^{(c)} = H_{m_0,n_0}^{(c)} a_{m_0,n_0} + H_{m_0,n_0}^{(c)} \underbrace{\left[ \sum_{(m,n)\neq(m_0,n_0)} a_{m,n} \int g_{m,n}(t) f_{m_0,n_0}^{*}(t)dt \right]}_{C_{m_0,n_0}} + D_{m_0,n_0} + b_{m_0,n_0} $$

$$ (7) $$

Dans cette expression, le terme $C_{m0,n0}$ est lié à l'interférence créée dans la région où le canal de transmission est supposé constant, et le terme $D_{m0,n0}$ est associé à l'interférence créée dans les régions où le canal de transmission n'est plus supposé constant.

Dans la suite de la description, on omet la composante de bruit $b$, et on néglige le terme $D_{m0,n0}$ de façon à simplifier les équations.

On considère ainsi que le signal reçu, en tout emplacement (m,n) du réseau temps/fréquence, peut s'interpréter comme le résultat du produit d'un canal complexe par un coefficient complexe, c'est-à-dire :

$\bar{y}_{m,n}^{(c)} = H_{m,n}^{(c)} a_{m,n}^{(c)} = \bar{H}_{m,n}^{(c)}\left( a_{m,n}^{(r)} + j a_{m,n}^{(i)} \right)$, , où $a_{m,n}^{(r)}$ et $a_{m,n}^{(i)}$ sont des valeurs réelles (l'exposant (r) indiquant la partie réelle d'une valeur complexe, et l'exposant (i) la partie imaginaire).

Après une première estimation du canal de transmission 31, suivie d'une égalisation 32, on obtient une première estimation des valeurs portées par les éléments de données, notée $\tilde{a}_{m,n}^{(r)}$.

Sachant que le signal reçu s'écrit $y_{m,n}^{(c)} = H_{m,n}^{(c)}\left(a_{m,n}^{(r)} + ja_{m,n}^{(i)}\right)$, on peut écrire

$$y_{m,n}^{(c)} = H_{m,n}^{(c)}\left(\tilde{a}_{m,n}^{(r)} + ja_{m,n}^{(i)}\right)$$ si l'estimation de l'élément de données est parfaite. Or au niveau des pilotes isolés, extraits lors de l'étape 33, on rappelle que les valeurs réelles et les emplacements temps/fréquence des pilotes isolés sont connus du récepteur. L'estimation est donc parfaite, et le terme $a_{m,n}^{(i)}$ permet de définir une interférence déterministe affectant le pilote isolé.

Considérant un pilote isolé à l'emplacement (*m,n*), on définit également une région autour de ce pilote isolé, notée $\Omega_{P,Q}$, telle que :

$\Omega_{P,Q} = \{(p,q), p = -P,...,P, q = -Q,...,Q\} - \{(0,0)\}$, où l'emplacement de coordonnées (0,0) correspond à l'emplacement (*m,n*).

Supposant une estimation fiable des valeurs réelles $a_{m_0+p,n_0+q}^{(r)}$, on détermine une interférence estimée affectant le pilote isolé.

On fait ensuite l'hypothèse que :

$$a_{m,n}^{(i)} \approx \sum_{p,q \in \Omega_{P,Q}} \Im\left\{\beta_{m_0+p,n_0+q}^{(m_0,n_0)}\right\} a_{m_0+p,n_0+q}^{(r)} \approx \sum_{p,q \in \Omega_{P,Q}} \Im\left\{\beta_{m_0+p,n_0+q}^{(m_0,n_0)}\right\} \hat{a}_{m_0+p,n_0+q}^{(r)}$$

où $\beta_{p,q}$ est une expression dont les valeurs réelles dépendent des fonctions *g* et *f* et du terme de phase $\phi_{m,n}$, et dont les éléments principaux sont présentés en annexe A, qui fait partie intégrante de la présente description, et $\Im\left\{\beta_{m',n'}^{(m,n)}\right\}$ désigne la partie imaginaire de $\beta_{m',n'}^{(m,n)}$.

Au cours de l'étape 34 de raffinement local, l'estimation locale du canal de transmission à l'emplacement (*m, n*) est obtenue par :

$$H_{m,n}^{(c)} = \frac{y_{m,n}^{(c)}}{\tilde{a}_{m,n}^{(r)} + ja_{m,n}^{(i)}}$$

On constate selon ce mode de réalisation que la valeur de l'estimation du canal de transmission au niveau des pilotes réels est très proche du vrai canal de transmission, dans la mesure où la valeur réelle du pilote isolé est connue du récepteur.

Comme indiqué précédemment, on peut combiner ces estimations locales raffinées à la première estimation, pour obtenir une estimation améliorée du canal de transmission.

Au cours d'une étape suivante 35, on peut égaliser le signal reçu à partir de l'estimation améliorée du canal de transmission, le désentrelacer, et le décoder.

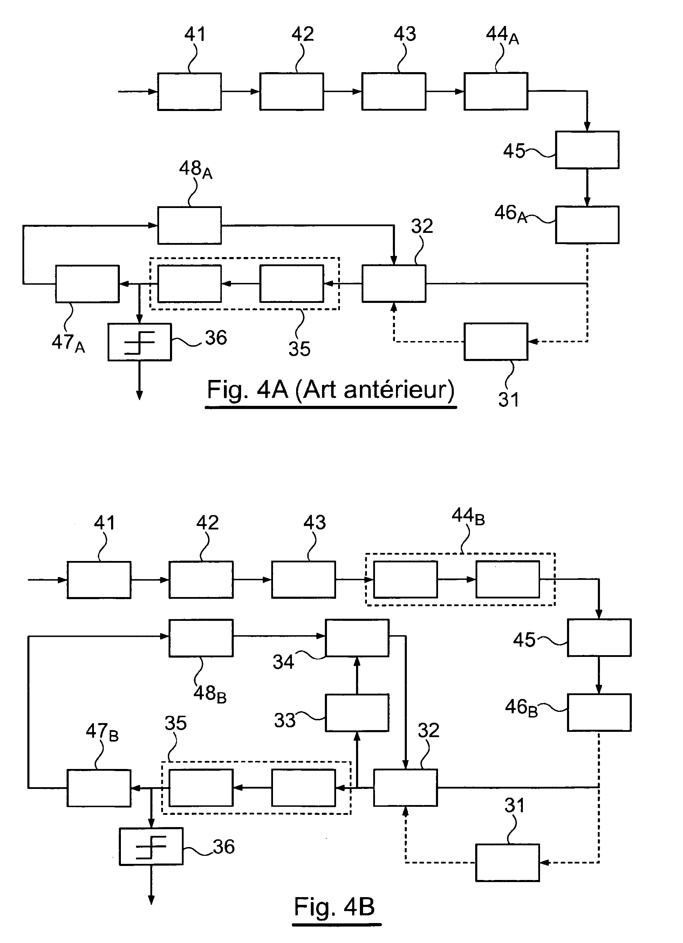

Selon une variante de réalisation illustrée en relation avec la figure 4B, l'étape de raffinement local est réitérée au moins deux fois.

Plus précisément, les figures 4A et 4B illustrent respectivement un schéma de turbo-estimation classique, mis en oeuvre pour une modulation de type OFDM, et de turbo-estimation selon un mode particulier de réalisation de l'invention, mis en oeuvre pour une modulation de type OFDM/OQAM ou BFDM/OQAM.

Côté émission, on constate que les étapes de codage des données 41, entrelacement 42, et insertion de préambule 43 sont identiques, selon ce mode de réalisation particulier de l'invention.

Dans le cadre d'une modulation classique de type OFDM, on met ensuite en oeuvre une transformée inverse de Fourier (IFFT) et on ajoute un intervalle de garde $44_A$. En revanche, dans le cadre d'une modulation de type OQAM selon ce mode de réalisation de l'invention, on met en oeuvre une étape d'insertion de pilotes isolés, suivie d'une modulation OQAM $44_B$.

Le signal multiporteuse est alors émis dans un canal de transmission 45.

Côté réception, dans le cadre d'une modulation classique de type OFDM, on réalise d'abord une transformation de Fourier (FFT), suivie d'une suppression de l'intervalle de garde $46_A$. On réalise ensuite les étapes classiques d'estimation du canal 31, d'égalisation du signal reçu 32, et de désentrelacement et décodage du signal égalisé 35, permettant de prendre une décision dite dure 36 (en anglais « hard »).

Dans le cadre d'une turbo estimation, le signal égalisé décodé est de nouveau encodé $47_A$, ré-entrelacé $48_A$, et de nouveau égalisé 32, de manière à affiner l'étape de décision 36.

Dans le cadre d'une modulation de type OFDM/OQAM ou BFDM/OQAM, on réalise d'abord une démodulation QAM $46_B$. On réalise ensuite les étapes décrites ci-dessus de première estimation du canal 31, d'égalisation du signal reçu 32, et de désentrelacement et décodage du signal égalisé 35, permettant de prendre une décision dure 36.

De plus, après l'égalisation du signal reçu 32, on extrait selon ce mode de réalisation de l'invention des pilotes isolés 33, de façon à raffiner localement l'estimation du canal de transmission au cours de l'étape 34.

On peut notamment déterminer une estimation améliorée du canal de transmission à partir de ces estimations locales raffinées, en accordant éventuellement une information de confiance à l'estimation du canal correspondant aux emplacements temps/fréquence des pilotes.

En particulier, dans le cadre d'une turbo estimation, le signal égalisé décodé est de nouveau encodé $47_B$, ré-entrelacé $48_B$, et intervient dans l'amélioration de l'estimation du canal de transmission.

Il est ainsi possible d'améliorer l'estimation des valeurs portées par les éléments de données informatifs grâce à un processus itératif.

On présente désormais, en relation avec les figures 5A et 5B, les structures simplifiées d'un dispositif d'émission et d'un dispositif de réception selon le mode de réalisation particulier décrit ci-dessus.

Comme illustré en figure 5A, un tel dispositif d'émission comprend une mémoire 51, une unité de traitement 52, équipée par exemple d'un microprocesseur μP, et pilotée par le programme d'ordinateur 53, mettant en oeuvre le procédé d'émission selon l'invention.

A l'initialisation, les instructions de code du programme d'ordinateur 53 sont par exemple chargées dans une mémoire RAM avant d'être exécutées par le processeur de l'unité de traitement 52. L'unité de traitement 52 reçoit en entrée des données à transmettre, sous la forme d'éléments de données informatifs. Le microprocesseur de l'unité de traitement 52 met en oeuvre les étapes du procédé d'émission décrit précédemment, de façon à construire un signal multiporteuse comprenant au moins un premier jeu d'éléments de données permettant de déterminer une première estimation du canal de transmission, et au moins un deuxième jeu d'éléments de données comprenant au moins un pilote isolé permettant un raffinement local de la première estimation. Pour cela, le dispositif d'émission comprend des moyens de mise en oeuvre des deux jeux d'éléments de données. Ces moyens sont pilotés par le microprocesseur de l'unité de traitement 52.

L'unité de traitement 52 délivre en sortie le signal multiporteuse précité.

Un dispositif de réception comme illustré en figure 5B comprend une mémoire 54, une unité de traitement 55, équipée par exemple d'un microprocesseur μP, et pilotée par le programme d'ordinateur 56, mettant en oeuvre le procédé de réception selon l'invention.

A l'initialisation, les instructions de code du programme d'ordinateur 56 sont par exemple chargées dans une mémoire RAM avant d'être exécutées par le processeur de l'unité de traitement 55. L'unité de traitement 55 reçoit en entrée le signal multiporteuse reçu *y(t)*. Le microprocesseur de l'unité de traitement 55 met en oeuvre les étapes du procédé de réception décrit précédemment, selon les instructions du programme d'ordinateur 56, pour estimer le canal de transmission et décoder les données reçues. Pour cela, le dispositif de réception comprend des moyens de première estimation du canal de transmission, et pour au moins un pilote isolé, des moyens d'extraction du pilote isolé, et des moyens de raffinement local de la première estimation, tenant compte de la valeur complexe du pilote isolé, délivrant une estimation locale raffinée du canal de transmission. Ces moyens sont pilotés par le microprocesseur de l'unité de traitement 55.

**ANNEXE A**

**Calcul des constantes** $\beta_{m_0+p,n_0+q}^{(m_0,n_0)}$ **liées aux fonctions de base de modulation et à la phase**

On présente ci-après une méthode de calcul des constantes réelles $\beta_{m_0+p,n_0+q}^{(m_0,n_0)}$ telles que :

$$\hat{a}_{m_0,n_0}^{(i)} \approx \sum_{p,q \in \Omega_{P,Q}} \Im\left\{\beta_{m_0+p,n_0+q}^{(m_0,n_0)}\right\} a_{m_0+p,n_0+q}^{(r)} \tag{8}$$

où $\Im\left\{\beta_{m',n'}^{(m,n)}\right\}$ désigne la partie imaginaire de $\beta_{m',n'}^{(m,n)}$.

On rappelle tout d'abord que le signal multiporteuse émis peut s'écrire sous la forme :

$$s(t) = \sum_{n}\sum_{m=0}^{M-1} a_{m,n} \underbrace{g(t-n\tau_0)e^{j2\pi m\nu_0 t}e^{j\phi_{m,n}}}_{g_{m,n}(t)} \tag{9}$$

Si par ailleurs on suppose que le canal de transmission est parfait (en le prenant par exemple égal à (1), au moins localement, l'estimée des coefficients transmis est donnée par :

$$\hat{a}_{m,n}^{(c)} = \sum_{n',m'} \left[\int f_{m,n}^{*}(t)g_{m',n'}(t)dt\right] a_{m',n'} \tag{10}$$

En posant :

$$\beta_{m',n'}^{(m,n)} = \int f_{m,n}^{*}(t)g_{m',n'}(t)dt \tag{11},$$

on obtient, pour des *fonctions f et g* biorthogonales, $\Re\left\{\hat{a}_{m,n}^{(c)}\right\} = a_{m,n}$, soit :

$$\hat{a}_{m,n}^{(c)} = a_{m,n}^{(r)} + j\hat{a}_{m,n}^{(i)} = a_{m,n} + j\Im\left\{\sum_{n',m'}\beta_{m',n'}^{(m,n)}a_{m',n'}\right\} = a_{m,n} + j\sum_{n',m'}\Im\left\{\beta_{m',n'}^{(m,n)}\right\}a_{m',n'}$$

$$\tag{12}$$

Il subsiste donc un terme d'interférence, qu'il est possible d'évaluer pour tout pilote ($a_{m0,n0}$) dans un voisinage $P \times Q$ en évaluant $\beta_{m',n'}$.

On remarque aussi que :

$$\hat{a}_{m,n}^{(i)} = \sum_{n',m'}\Im\left\{\beta_{m',n'}^{(m,n)}\right\}a_{m',n'} \tag{13}.$$

En développant l'expression des fonctions de base de modulation et de démodulation, on obtient :

$$\beta_{m',n'}^{(m,n)} = e^{j\left(\phi_{m',n'}-\phi_{m,n}\right)} \int f^*\left(t - n\tau_0\right)g\left(t - n'\tau_0\right)e^{j2\pi(m'-m)\nu_0 t}dt \qquad (14)$$

Dans un voisinage $P \times Q$ de $(m_0, n_0)$, cette équation se réécrit en posant $m = m_0$, $n = n_0$, $m' = m_0 + p$ et $n' = n_0 + q$, ce qui donne:

$$\beta_{m_0+p,n_0+q}^{(m_0,n_0)} = e^{j\left(\phi_{m_0+p,n_0+q}-\phi_{m_0,n_0}\right)} \int f^*\left(t - n_0\tau_0\right)g\left(t - \left(n_0 + p\right)\tau_0\right)e^{j2\pi p\nu_0 t}dt \quad (15)$$

$$\beta_{m_0+p,n_0+q}^{(m_0,n_0)} = \left(-1\right)^{n_0 p} e^{j\left(\phi_{m_0+p,n_0+q}-\phi_{m_0,n_0}\right)} \int f^*\left(t\right)g\left(t - p\tau_0\right)e^{j2\pi p\nu_0 t}dt \qquad (16)$$

On constate donc que les coefficients $\beta$ s'obtiennent à partir de la fonction d'ambiguïté croisée de $f$ et $g$ (« cross-ambiguïty ») dans le cas biorthogonal, ou tout simplement à partir de la fonction d'ambiguïté de g dans le cas orthogonal.

Pour son évaluation numérique, $f$ et $g$ étant réalisés avec des filtres de longueur finie, ce calcul est plus précis s'il est effectué directement en discret :

$$\beta_{m_0+p,n_0+q}^{(m_0,n_0)} = \left(-1\right)^{n_0 p} e^{j\left(\phi_{m_0+p,n_0+q}-\phi_{m_0,n_0}\right)} \sum_k f^*[k]g[k - qN]e^{j\frac{2\pi}{2N}p\left(k-\frac{D}{2}\right)} \quad (17)$$

avec $D = \alpha N - \gamma$ et $M = 2N$.

Pour son implantation côté réception d'un transmultiplexeur, il est préférable de tenir compte du fait que ces coefficients sont à appliquer en prenant en compte un retard de $\alpha$ échantillons.

On présente ci-après deux exemples de détermination des coefficients $\beta$, dans le cadre d'une modulation de type OFDM/OQAM présentant une fonction prototype continue réelle et paire.

*1. Phase définie par* $\phi_{m,n} = \dfrac{\pi}{2}\left(n + m\right)$

En posant :

$$\phi_{m,n} = \frac{\pi}{2}\left(n + m\right) \qquad (18),$$

l'équation (15) devient :

$$\beta_{m_0+p,n_0+q}^{(m_0,n_0)} = \left(-1\right)^{n_0 p} e^{j\frac{\pi}{2}(p+q)} \int g\left(t\right)g\left(t - q\tau_0\right)e^{j2\pi p\nu_0 t}dt \qquad (19).$$

On introduit ensuite la fonction d'ambiguïté d'une fonction $x$ avec la notation utilisée dans le document de brevet WO 02/25884 précité :

$$A_x\left(\tau, \nu\right) = \int x\left(t + \frac{\tau}{2}\right) \cdot x^*\left(t - \frac{\tau}{2}\right)e^{-j2\pi\nu t}dt$$

En effectuant le changement de variable $t = t' + \dfrac{q\tau_0}{2}$ dans l'équation (19), on obtient :

$$\beta_{m_0+p,n_0+q}^{(m_0,n_0)} = (-1)^{n_0 p}\, e^{j\frac{\pi}{2}(p+q)} \int g\left(t + \frac{q\tau_0}{2}\right) g\left(t - \frac{q\tau_0}{2}\right) e^{j2\pi p\nu_0\left(t + \frac{q\tau_0}{2}\right)}\, dt$$

Sachant que $\nu_0\tau_0 = 1/2$, on obtient ensuite :

$$\beta_{m_0+p,n_0+q}^{(m_0,n_0)} = -(-1)^{n_0 p}\, e^{j\frac{\pi}{2}((p+q)+pq)}\, A(q\tau_0, p\nu_0).$$

Sachant que dans ce cas précis la fonction $A$ est réelle, on peut alors vérifier que le coefficient $\beta_{p,q}$ est un imaginaire pur.

*2. Phase définie par* $\phi_{m,n} = \dfrac{\pi}{2}(n + m) + \pi nm$

En effectuant le même calcul que précédemment en posant $\phi_{m,n} = \dfrac{\pi}{2}(n + m) + \pi nm$ , , on obtient :

$$\beta_{m_0+p,n_0+q}^{(m_0,n_0)} = -(-1)^{m_0 q + pq}\, e^{j\frac{\pi}{2}((p+q)+pq)}\, A(q\tau_0, p\nu_0)$$

**Revendications**

**1.** Procédé de réception d'un signal reçu correspondant à un signal multiporteuse émis par au moins un émetteur via un canal de transmission, ledit signal multiporteuse étant formé d'une succession temporelle de symboles constitués d'un ensemble d'éléments de données à valeurs réelles comprenant :

- des éléments de données informatifs, et
- pour au moins certains desdits symboles, des éléments de données de référence appelés pilotes, dont la valeur et l'emplacement à l'émission sont connus d'au moins un récepteur destiné à effectuer une réception dudit signal multiporteuse,

chacun desdits éléments de données modulant une fréquence porteuse dudit signal, une fréquence porteuse modulée par un desdits éléments de données étant appelée porteuse,
au moins un desdits pilotes étant un pilote isolé (23) en émission, dont les porteuses directement voisines (24), dans l'espace temps/fréquence, portent des éléments de données informatifs,
ledit procédé de réception comprenant:

- une étape de première estimation (31) dudit canal de transmission,
- une étape d'extraction (33) dudit pilote isolé, délivrant une valeur complexe représentative dudit pilote isolé, après passage dans ledit canal de transmission,
- une étape de raffinement local (34) de ladite première estimation, tenant compte de ladite valeur complexe dudit pilote isolé, délivrant une estimation locale raffinée dudit canal de transmission.

**2.** Procédé de réception selon la revendication 1, **caractérisé en ce que** ladite étape de raffinement local (34) met en oeuvre une comparaison d'un terme d'interférence imaginaire affectant ledit pilote isolé, et une correction locale de ladite première estimation en fonction du résultat de ladite comparaison.

3. Procédé de réception selon la revendication 2, **caractérisé en ce que** ladite comparaison compare :

   - une interférence déterministe affectant ledit pilote isolé, correspondant à la partie imaginaire de ladite valeur complexe ; et
   - une interférence estimée affectant ledit pilote isolé, déterminée à partir d'une estimation d'au moins un élément de données informatif modulant une porteuse directement voisine dudit pilote isolé dans l'espace temps/fréquence, obtenue à partir de ladite première estimation.

4. Procédé de réception selon l'une quelconque des revendications 2 et 3, **caractérisé en ce que** ladite estimation locale raffinée est affectée d'au moins une information de confiance.

5. Procédé de réception selon l'une quelconque des revendications 1 à 4, **caractérisé en ce que** ladite étape de raffinement local est réitérée au moins une fois, une étape de raffinement local courante tenant compte du résultat d'une étape de raffinement local précédente.

6. Procédé de réception selon la revendication 4 et la revendication 5, **caractérisé en ce que** ladite étape de raffinement local courante tient également compte de ladite information de confiance.

7. Procédé de réception selon l'une quelconque des revendications 1 à 6, **caractérisé en ce que** ladite première étape d'estimation délivre une estimation de canal pour une région de l'espace temps/fréquence prédéterminée, et **en ce que** ladite région est découpée en au moins deux sous-régions de raffinement comprenant chacune un unique pilote isolé, ladite étape de raffinement local étant appliquée indépendamment à chacune desdites sous-régions.

8. Dispositif de réception d'un signal reçu correspondant à un signal multiporteuse émis par au moins un émetteur via un canal de transmission,
   ledit signal multiporteuse étant formé d'une succession temporelle de symboles constitués d'un ensemble d'éléments de données à valeurs réelles comprenant :

   - des éléments de données informatifs, et
   - pour au moins certains desdits symboles, des éléments de données de référence appelés pilotes, dont la valeur et l'emplacement à l'émission sont connus dudit dispositif de réception destiné à effectuer une réception dudit signal multiporteuse,

   chacun desdits éléments de données modulant une fréquence porteuse dudit signal, une fréquence porteuse modulée par un desdits éléments de données étant appelée porteuse,
   au moins un desdits pilotes étant un pilote isolé (23) en émission, dont les porteuses directement voisines (24), dans l'espace temps/fréquence, portent des éléments de données informatifs,
   ledit dispositif de réception comprenant:

   - des moyens de première estimation (31) dudit canal de transmission, délivrant une valeur
   - des moyens d'extraction d'extraction (33) dudit pilote isolé, complexe représentative dudit pilote isolé, après passage dans ledit canal de transmission,
   - des moyens de raffinement local (34) de ladite première estimation, tenant compte de ladite valeur complexe dudit pilote isolé, délivrant une estimation locale raffinée dudit canal de transmission.

9. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé de réception selon l'une au moins des revendications 1 à 7.

10. Procédé d'émission d'un signal multiporteuse formé d'une succession temporelle de symboles constitués d'un ensemble d'éléments de données à valeurs réelles comprenant :

    - des éléments de données informatifs, et
    - pour au moins certains desdits symboles, des éléments de données de référence appelés pilotes, dont la valeur et l'emplacement à l'émission sont connus d'au moins un récepteur destiné à effectuer une réception dudit signal multiporteuse,

chacun desdits éléments de données modulant une fréquence porteuse dudit signal, une fréquence porteuse modulée par un desdits éléments de données étant appelée porteuse,

**caractérisé en ce qu'**il met en oeuvre au moins deux jeux d'éléments de données parmi ledit ensemble d'éléments de données, dont :

- un premier jeu comprenant un préambule formé d'au moins un symbole constitués de pilotes d'estimation d'un canal de transmission entre un émetteur destiné à émettre ledit signal multiporteuse et ledit récepteur, et
- un deuxième jeu comprenant au moins un pilote isolé (23), dont les porteuses directement voisines (24), dans l'espace temps/fréquence, portent des éléments de données informatifs de raffinement local de ladite première estimation en tenant compte d'une valeur complexe associée audit pilote isolé après passage dans ledit canal de transmission.

**11.** Procédé d'émission d'un signal multiporteuse formé d'une succession temporelle de symboles constitués d'un ensemble d'éléments de données à valeurs réelles comprenant :

- des éléments de données informatifs, et
- pour au moins certains desdits symboles, des éléments de données de référence appelés pilotes, dont la valeur et l'emplacement à l'émission sont connus d'au moins un récepteur destiné à effectuer une réception dudit signal multiporteuse,

chacun desdits éléments de données modulant une fréquence porteuse dudit signal, une fréquence porteuse modulée par un desdits éléments de données étant appelée porteuse,

**caractérisé en ce qu'**il met en oeuvre au moins deux jeux d'éléments de données parmi ledit ensemble d'éléments de données, dont :

- un premier jeu comprenant au moins une paire de pilotes d'estimation d'un canal de transmission entre un émetteur destiné à émettre ledit signal multiporteuse et ledit récepteur, ladite paire de pilotes correspondant à des pilotes localisés dans une région de voisinage dans laquelle le canal de transmission est considéré comme constant, et
- un deuxième jeu comprenant au moins un pilote isolé (23), dont les porteuses directement voisines (24), dans l'espace temps/fréquence, portent des éléments de données informatifs de raffinement local de ladite première estimation en tenant compte d'une valeur complexe associée audit pilote isolé après passage dans ledit canal de transmission.

**12.** Dispositif d'émission d'un signal multiporteuse formé d'une succession temporelle de symboles constitués d'un ensemble d'éléments de données à valeurs réelles comprenant :

- des éléments de données informatifs, et
- pour au moins certains desdits symboles, des éléments de données de référence appelés pilotes, dont la valeur et l'emplacement à l'émission sont connus d'au moins un récepteur destiné à effectuer une réception dudit signal multiporteuse,

chacun desdits éléments de données modulant une fréquence porteuse dudit signal, une fréquence porteuse modulée par un desdits éléments de données étant appelée porteuse,

**caractérisé en ce qu'**il comprend des moyens de mise en oeuvre d'au moins deux jeux d'éléments de données parmi ledit ensemble d'éléments de données, dont :

- un premier jeu comprenant un préambule formé d'au moins un symbole d'estimation d'un canal de transmission entre un émetteur destiné à émettre ledit signal multiporteuse et ledit récepteur, et
- un deuxième jeu comprenant au moins un pilote isolé (23), dont les porteuses directement voisines (24), dans l'espace temps/fréquence, portent des éléments de données informatifs de raffinement local de ladite première estimation en tenant compte d'une valeur complexe associée audit pilote isolé après passage dans ledit canal de transmission.

**13.** Dispositif d'émission d'un signal multiporteuse formé d'une succession temporelle de symboles constitués d'un ensemble d'éléments de données à valeurs réelles comprenant :

- des éléments de données informatifs, et
- pour au moins certains desdits symboles, des éléments de données de référence appelés pilotes, dont la valeur et l'emplacement à l'émission sont connus d'au moins un récepteur destiné à effectuer une réception dudit signal multiporteuse,

chacun desdits éléments de données modulant une fréquence porteuse dudit signal, une fréquence porteuse modulée par un desdits éléments de données étant appelée porteuse,
**caractérisé en ce qu'**il comprend des moyens de mise en oeuvre d'au moins deux jeux d'éléments de données parmi ledit ensemble d'éléments de données, dont :

- un premier jeu comprenant au moins une paire de pilotes d'estimation d'un canal de transmission entre un émetteur destiné à émettre ledit signal multiporteuse et ledit récepteur, ladite paire de pilotes correspondant à des pilotes localisés dans une région de voisinage dans laquelle le canal de transmission est considéré comme constant, et
- un deuxième jeu comprenant au moins un pilote isolé (23), dont les porteuses directement voisines (24), dans l'espace temps/fréquence, portent des éléments de données informatifs de raffinement local de ladite première estimation en tenant compte d'une valeur complexe associée audit pilote isolé après passage dans ledit canal de transmission.

14. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé d'émission selon la revendication 10.

15. Signal multiporteuse formé d'une succession temporelle de symboles constitués d'un ensemble d'éléments de données à valeurs réelles comprenant :

- des éléments de données informatifs, et
- pour au moins certains desdits symboles, des éléments de données de référence appelés pilotes dont la valeur et l'emplacement à l'émission sont connus d'au moins un récepteur destiné à effectuer une réception dudit signal multiporteuse,

chacun desdits éléments de données modulant une fréquence porteuse dudit signal, une fréquence porteuse modulée par un desdits éléments de données étant appelée porteuse,
**caractérisé en ce que** ledit ensemble d'éléments de données à valeurs réelles comprend :

- au moins un premier jeu d'éléments de données comprenant un préambule formé d'au moins un symbole constitué de pilotes d'estimation d'un canal de transmission entre un émetteur destiné à émettre ledit signal multiporteuse et ledit récepteur, et
- au moins un deuxième jeu d'éléments de données comprenant au moins un pilote isolé (23), dont les porteuses directement voisines (24), dans l'espace temps/fréquence, portent des éléments de données informatifs de raffinement local de ladite première estimation en tenant compte d'une valeur complexe associée audit pilote isolé après passage dans ledit canal de transmission.

16. Signal multiporteuse formé d'une succession temporelle de symboles constitués d'un ensemble d'éléments de données à valeurs réelles comprenant :

- des éléments de données informatifs, et
- pour au moins certains desdits symboles, des éléments de données de référence appelés pilotes dont la valeur et l'emplacement à l'émission sont connus d'au moins un récepteur destiné à effectuer une réception dudit signal multiporteuse,

chacun desdits éléments de données modulant une fréquence porteuse dudit signal, une fréquence porteuse modulée par un desdits éléments de données étant appelée porteuse,
**caractérisé en ce que** ledit ensemble d'éléments de données à valeurs réelles comprend :

- au moins un premier jeu d'éléments de données comprenant au moins une paire de pilotes d'estimation d'un canal de transmission entre un émetteur destiné à émettre ledit signal multiporteuse et ledit récepteur, ladite paire de pilotes correspondant à des pilotes localisés dans une région de voisinage dans laquelle le canal de transmission est considéré comme constant, et
- au moins un deuxième jeu d'éléments de données comprenant au moins un pilote isolé (23), dont les porteuses directement voisines (24), dans l'espace temps/fréquence, portent des éléments de données informatifs de raffinement local de ladite première estimation en tenant compte d'une valeur complexe associée audit pilote isolé après passage dans ledit canal de transmission.

**Claims**

1. Method of reception of a received signal corresponding to a multicarrier signal transmitted by at least one transmitter via a transmission channel, said multicarrier signal being formed of a temporal succession of symbols consisting of a set of data elements with real values comprising:

   - informative data elements, and
   - for at least some of said symbols, reference data elements called pilots, whose value and location on transmission are known to at least one receiver intended to perform a reception of said multicarrier signal,

   each of said data elements modulating a carrier frequency of said signal, a carrier frequency modulated by one of said data elements being called carrier,
   at least one of said pilots being an isolated pilot (23) on transmission, whose directly neighbouring carriers (24), in the time/frequency space, carry informative data elements,
   said reception method comprising:

   - a step of first estimation (31) of said transmission channel,
   - a step (33) of extracting said isolated pilot, delivering a complex value representative of said isolated pilot, after passage through said transmission channel,
   - a step (34) of local refinement of said first estimation, taking account of said complex value of said isolated pilot, delivering a refined local estimation of said transmission channel.

2. Method of reception according to Claim 1, **characterized in that** said local refinement step (34) implements a comparison of an imaginary interference term affecting said isolated pilot, and a local correction of said first estimation as a function of the result of said comparison.

3. Method of reception according to Claim 2, **characterized in that** said comparison compares:

   - a deterministic interference affecting said isolated pilot, corresponding to the imaginary part of said complex value; and
   - an estimated interference affecting said isolated pilot, determined on the basis of an estimation of at least one informative data element modulating a directly neighbouring carrier of said isolated pilot in the time/frequency space, obtained on the basis of said first estimation.

4. Method of reception according to any one of Claims 2 and 3, **characterized in that** said refined local estimation is assigned at least one confidence information item.

5. Method of reception according to any one of Claims 1 to 4, **characterized in that** said local refinement step is repeated at least once, a current local refinement step taking account of the result of a previous local refinement step.

6. Method of reception according to Claim 4 and Claim 5, **characterized in that** said current local refinement step also takes account of said confidence information item.

7. Method of reception according to any one of Claims 1 to 6, **characterized in that** said first estimation step delivers a channel estimation for a predetermined region of the time/frequency space, and **in that** said region is split into at least two refinement sub-regions each comprising a single isolated pilot, said local refinement step being applied independently to each of said sub-regions.

8. Device for receiving a received signal corresponding to a multicarrier signal transmit by at least one transmitter via a transmission channel,
   said multicarrier signal being formed of a temporal succession of symbols consisting of a set of data elements with real values comprising:

- informative data elements, and
- for at least some of said symbols, reference data elements called pilots, whose value and location on transmission are known to said receiver intended to perform a reception of said multicarrier signal,

each of said data elements modulating a carrier frequency of said signal, a carrier frequency modulated by one of said data elements being called carrier,
at least one of said pilots being an isolated pilot (23) on transmission, whose directly neighbouring carriers (24), in the time/frequency space, carry informative data elements,
said receiver comprising:

- means of first estimation (31) of said transmission channel,
- extraction means (33) for extracting said isolated pilot, delivering a complex value representative of said isolated pilot, after passage through said transmission channel,
- means of local refinement (34) of said first estimation, taking account of said complex value of said isolated pilot, delivering a refined local estimation of said transmission channel.

9. Computer program product downloadable from a communication network and/or recorded on a medium readable by computer and/or executable by a processor, **characterized in that** it comprises program code instructions for the implementation of the method of reception according to at least one of Claims 1 to 7.

10. Method of transmitting a multicarrier signal formed of a temporal succession of symbols consisting of a set of data elements with real values comprising:

- informative data elements, and
- for at least some of said symbols, reference data elements called pilots, whose value and location on transmission are known to at least one receiver intended to perform a reception of said multicarrier signal,

each of said data elements modulating a carrier frequency of said signal, a carrier frequency modulated by one of said data elements being called carrier, **characterized in that** it implements at least two suites of data elements from among said set of data elements,
of which:

- a first suite comprising a preamble formed of at least one symbol consisting of pilots regarding estimation of a transmission channel between a transmitter intended to transmit said multicarrier signal and said receiver, and
- a second suite comprising at least one isolated pilot (23), whose directly neighbouring carriers (24), in the time/frequency space, carry informative data elements regarding local refinement of said first estimation by taking account of a complex value associated with said isolated pilot after passage through said transmission channel.

11. Method of transmitting a multicarrier signal formed of a temporal succession of symbols consisting of a set of data elements with real values comprising:

- informative data elements, and
- for at least some of said symbols, reference data elements called pilots, whose value and location on transmission are known to at least one receiver intended to perform a reception of said multicarrier signal,

each of said data elements modulating a carrier frequency of said signal, a carrier frequency modulated by one of said data elements being called carrier, **characterized in that** it implements at least two suites of data elements from among said set of data elements,
of which:

- a first suite comprising at least one pair of pilots regarding estimation of a transmission channel between a transmitter intended to transmit said multicarrier signal and said receiver, said pair of pilots corresponding to pilots located in a neighbourhood region in which the transmission channel is considered to be constant, and
- a second suite comprising at least one isolated pilot (23), whose directly neighbouring carriers (24), in the time/frequency space, carry informative data elements regarding local refinement of said first estimation by taking account of a complex value associated with said isolated pilot after passage through said transmission channel.

**12.** Device for transmitting a multicarrier signal formed of a temporal succession of symbols consisting of a set of data elements with real values comprising:

- informative data elements, and
- for at least some of said symbols, reference data elements called pilots, whose value and location on transmission are known to at least one receiver intended to perform a reception of said multicarrier signal, each of said data elements modulating a carrier frequency of said signal, a carrier frequency modulated by one of said data elements being called carrier, **characterized in that** it comprises means of implementation of at least two suites of data elements from among said set of data elements, of which:

- a first suite comprising a preamble formed of at least one symbol of estimation of a transmission channel between a transmitter intended to transmit said multicarrier signal and said receiver, and
- a second suite comprising at least one isolated pilot (23), whose directly neighbouring carriers (24), in the time/frequency space, carry informative data elements regarding local refinement of said first estimation by taking account of a complex value associated with said isolated pilot after passage through said transmission channel.

**13.** Device for transmitting a multicarrier signal formed of a temporal succession of symbols consisting of a set of data elements with real values comprising:

- informative data elements, and
- for at least some of said symbols, reference data elements called pilots, whose value and location on transmission are known to at least one receiver intended to perform a reception of said multicarrier signal,

each of said data elements modulating a carrier frequency of said signal, a carrier frequency modulated by one of said data elements being called carrier, **characterized in that** it comprises means of implementation of at least two suites of data elements from among said set of data elements, of which:

- a first suite comprising at least one pair of pilots regarding estimation of a transmission channel between a transmitter intended to transmit said multicarrier signal and said receiver, said pair of pilots corresponding to pilots located in a neighbourhood region in which the transmission channel is considered to be constant, and
- a second suite comprising at least one isolated pilot (23), whose directly neighbouring carriers (24), in the time/frequency space, carry informative data elements regarding local refinement of said first estimation by taking account of a complex value associated with said isolated pilot after passage through said transmission channel.

**14.** Computer program product downloadable from a communication network and/or recorded on a medium readable by computer and/or executable by a processor, **characterized in that** it comprises program code instructions for the implementation of the method of transmitting according to Claim 10.

**15.** Multicarrier signal formed of a temporal succession of symbols consisting of a set of data elements with real values comprising:

- informative data elements, and
- for at least some of said symbols, reference data elements called pilots, whose value and location on transmission are known to at least one receiver intended to perform a reception of said multicarrier signal,

each of said data elements modulating a carrier frequency of said signal, a carrier frequency modulated by one of said data elements being called carrier,
**characterized in that** said set of data elements with real values comprises:

- at least one first suite of data elements comprising a preamble formed of at least one symbol consisting of pilots regarding estimation of a transmission channel between a transmitter intended to transmit said multicarrier signal and said receiver, and
- at least one second suite of data elements comprising at least one isolated pilot (23), whose directly neighbouring carriers (24), in the time/frequency space, carry informative data elements regarding local refinement of said first estimation by taking account of a complex value associated with said isolated pilot after passage through said transmission channel.

**16.** Multicarrier signal formed of a temporal succession of symbols consisting of a set of data elements with real values comprising:

- informative data elements, and
- for at least some of said symbols, reference data elements called pilots whose value and location on transmission are known to at least one receiver intended to perform a reception of said multicarrier signal,

each of said data elements modulating a carrier frequency of said signal, a carrier frequency modulated by one of said data elements being called carrier,

**characterized in that** said set of data elements with real values comprises:

- at least one first suite of data elements comprising at least one pair of pilots regarding estimation of a transmission channel between a transmitter intended to transmit said multicarrier signal and said receiver, said pair of pilots corresponding to pilots located in a neighbourhood region in which the transmission channel is considered to be constant, and
- at least one second suite of data elements comprising at least one isolated pilot (23), whose directly neighbouring carriers (24), in the time/frequency space, carry informative data elements regarding local refinement of said first estimation by taking account of a complex value associated with said isolated pilot after passage through said transmission channel.

**Patentansprüche**

**1.** Verfahren zum Empfang eines empfangenen Signals entsprechend einem Mehrträgersignal, das von mindestens einem Sender über einen Übertragungskanal gesendet wird,

wobei das Mehrträgersignal aus einer zeitlichen Folge von Symbolen geformt wird, die aus einer Einheit von Datenelementen mit Istwerten bestehen,
die enthält:

- informative Datenelemente, und
- für mindestens bestimmte der Symbole, Pilot genannte Bezugsdatenelemente, deren Wert und Stelle beim Senden mindestens einem Empfänger bekannt sind, der dazu bestimmt ist, einen Empfang des Mehrträgersignals durchzuführen, wobei jedes der Datenelemente eine Trägerfrequenz des Signals moduliert, wobei eine von einem der Datenelemente modulierte Trägerfrequenz Träger genannt wird,

wobei mindestens einer der Piloten ein sendeseitiger isolierter Pilot (23) ist, dessen direkt benachbarte Träger (24) im Zeit-/Frequenz-Raum informative Datenelemente tragen,
wobei das Empfangsverfahren enthält:

- einen Schritt der ersten Schätzung (31) des Übertragungskanals,
- einen Schritt der Entnahme (33) des isolierten Piloten, der einen für den isolierten Piloten repräsentativen komplexen Wert liefert, nach dem Durchgang im Übertragungskanal,
- einen Schritt lokaler Verfeinerung (34) der ersten Schätzung unter Berücksichtigung des komplexen Werts des isolierten Piloten, der eine verfeinerte lokale Schätzung des Übertragungskanals liefert.

**2.** Empfangsverfahren nach Anspruch 1, **dadurch gekennzeichnet, dass** der Schritt lokaler Verfeinerung (34) einen Vergleich eines imaginären Interferenzterms, der sich auf den isolierten Piloten auswirkt, und eine lokale Korrektur der ersten Schätzung abhängig vom Ergebnis des Vergleichs anwendet.

**3.** Empfangsverfahren nach Anspruch 2, **dadurch gekennzeichnet, dass** der Vergleich vergleicht:

- eine sich auf den isolierten Piloten auswirkende deterministische Interferenz, die dem imaginären Teil des komplexen Werts entspricht; und
- eine sich auf den isolierten Piloten auswirkende geschätzte Interferenz, die ausgehend von einer Schätzung mindestens eines informativen Datenelements bestimmt wird, das einen Träger moduliert, der dem isolierten Piloten im Zeit-/Frequenz-Raum direkt benachbart ist, erhalten ausgehend von der ersten Schätzung.

4. Empfangsverfahren nach einem der Ansprüche 2 und 3, **dadurch gekennzeichnet, dass** die verfeinerte lokale Schätzung mit mindestens einer Vertrauensinformation versehen ist.

5. Empfangsverfahren nach einem der Ansprüche 1 bis 4, **dadurch gekennzeichnet, dass** der Schritt lokaler Verfeinerung mindestens einmal wiederholt wird, wobei ein laufender Schritt lokaler Verfeinerung das Ergebnis eines vorhergehenden Schritts lokaler Verfeinerung berücksichtigt.

6. Empfangsverfahren nach Anspruch 4 und Anspruch 5, **dadurch gekennzeichnet, dass** der laufende Schritt lokaler Verfeinerung ebenfalls die Vertrauensinformation berücksichtigt.

7. Empfangsverfahren nach einem der Ansprüche 1 bis 6, **dadurch gekennzeichnet, dass** der erste Schätzungsschritt eine Kanalschätzung für einen vorbestimmten Bereich des Zeit-/Frequenz-Raums liefert, und dass der Bereich in mindestens zwei Unterbereiche der Verfeinerung aufgeteilt ist, die je einen einzigen isolierten Piloten enthalten, wobei der Schritt lokaler Verfeinerung unabhängig an jeden der Unterbereiche angewendet wird.

8. Vorrichtung zum Empfang eines empfangenen Signals entsprechend einem von mindestens einem Sender über einen Übertragungskanal gesendeten Mehrträgersignal, wobei das Mehrträgersignal aus einer zeitlichen Folge von Symbolen geformt wird, die aus einer Einheit von Datenelementen mit Istwerten bestehen, die enthält:

    - informative Datenelemente, und
    - für mindestens bestimmte der Symbole, Pilot genannte Bezugsdatenelemente, deren Wert und Stelle beim Senden der Empfangsvorrichtung bekannt sind, die dazu bestimmt ist, einen Empfang des Mehrträgersignals durchzuführen, wobei jedes der Datenelemente eine Trägerfrequenz des Signals moduliert, wobei eine von einem der Datenelemente modulierte Trägerfrequenz Träger genannt wird,

    wobei mindestens einer der Piloten ein sendeseitiger isolierter Pilot (23) ist, dessen direkt benachbarte Träger (24) im Zeit-/Frequenz-Raum informative Datenelemente tragen, wobei die Empfangsvorrichtung enthält:

    - Einrichtungen zur ersten Schätzung (31) des Übertragungskanals,
    - Einrichtungen zur Entnahme (33) des isolierten Piloten, die einen für den isolierten Piloten repräsentativen komplexen Wert liefern, nach dem Durchgang im Übertragungskanal,
    - Einrichtungen lokaler Verfeinerung (34) der ersten Schätzung unter Berücksichtigung des komplexen Werts des isolierten Piloten, die und eine verfeinerte lokale Schätzung des Übertragungskanals liefern.

9. Computerprogrammprodukt, das von einem Kommunikationsnetz heruntergeladen und/oder auf einem computerlesbaren Träger aufgezeichnet und/oder von einem Prozessor ausgeführt werden kann, **dadurch gekennzeichnet, dass** es Programmcodeanweisungen zur Durchführung des Empfangsverfahrens nach mindestens einem der Ansprüche 1 bis 7 enthält.

10. Verfahren zum Senden eines Mehrträgersignals, das aus einer zeitlichen Folge von Symbolen geformt wird, die aus einer Einheit von Datenelementen mit Istwerten bestehen, die enthält:

    - informative Datenelemente, und
    - für mindestens bestimmte der Symbole, Pilot genannte Bezugsdatenelemente, deren Wert und Stelle beim Senden mindestens einem Empfänger bekannt sind, der dazu bestimmt ist, einen Empfang des Mehrträgersignals durchzuführen, wobei jedes der Datenelemente eine Trägerfrequenz des Signals moduliert, wobei eine von einem der Datenelemente modulierte Trägerfrequenz Träger genannt wird, **dadurch gekennzeichnet, dass** es mindestens zwei Sätze von Datenelementen aus der Einheit von Datenelementen anwendet, darunter:
    - einen ersten Satz, der eine Präambel enthält, die von mindestens einem Symbol geformt wird, das aus Schätzpiloten eines Übertragungskanals zwischen einem Sender, der dazu bestimmt ist, das Mehrträgersignal zu senden, und dem Empfänger besteht, und

- einen zweiten Satz, der mindestens einen isolierten Piloten (23) enthält, dessen im Zeit-/Frequenz-Raum direkt benachbarte Träger (24) informative Datenelemente lokaler Verfeinerung der ersten Schätzung unter Berücksichtigung eines dem isolierten Piloten nach dem Durchgang im Übertragungskanal zugeordneten komplexen Werts tragen.

11. Verfahren zum Senden eines Mehrträgersignals, das aus einer zeitlichen Folge von Symbolen geformt wird, die aus einer Einheit von Datenelementen mit Istwerten bestehen, die enthält:

   - informative Datenelemente, und
   - für mindestens bestimmte der Symbole, Pilot genannte Bezugsdatenelemente, deren Wert und Stelle beim Senden mindestens einem Empfänger bekannt sind, der dazu bestimmt ist, einen Empfang des Mehrträgersignals durchzuführen, wobei jedes der Datenelemente eine Trägerfrequenz des Signals moduliert, wobei eine von einem der Datenelemente modulierte Trägerfrequenz Träger genannt wird,

   **dadurch gekennzeichnet, dass** es mindestens zwei Sätze von Datenelementen aus der Einheit von Datenelementen anwendet, darunter:

   - einen ersten Satz, der mindestens ein Paar von Schätzpiloten eines Übertragungskanals zwischen einem Sender, der dazu bestimmt ist, das Mehrträgersignal zu senden, und dem Empfänger enthält, wobei das Paar von Piloten Piloten entspricht, die in einem Nachbarschaftsbereich lokalisiert sind, in dem der Übertragungskanal als konstant angesehen wird, und
   - einen zweiten Satz, der mindestens einen isolierten Piloten (23) enthält, dessen im Zeit-/Frequenz-Raum direkt benachbarte Träger (24) informative Datenelemente lokaler Verfeinerung der ersten Schätzung unter Berücksichtigung eines dem isolierten Piloten nach dem Durchgang im Übertragungskanal zugeordneten komplexen Werts tragen.

12. Vorrichtung zum Senden eines Mehrträgersignals, das aus einer zeitlichen Folge von Symbolen geformt wird, die aus einer Einheit von Datenelementen mit Istwerten bestehen, die enthält:

   - informative Datenelemente, und
   - für mindestens bestimmte der Symbole, Pilot genannte Bezugsdatenelemente, deren Wert und Stelle beim Senden mindestens einem Empfänger bekannt sind, der dazu bestimmt ist, einen Empfang des Mehrträgersignals durchzuführen, wobei jedes der Datenelemente eine Trägerfrequenz des Signals moduliert, wobei eine von einem der Datenelemente modulierte Trägerfrequenz Träger genannt wird,

   **dadurch gekennzeichnet, dass** sie Einrichtungen zur Anwendung von mindestens zwei Sätzen von Datenelementen aus der Einheit von Datenelementen enthält, darunter:

   - einen ersten Satz, der eine Präambel enthält, die aus mindestens einem Schätzsymbol eines Übertragungskanals zwischen einem Sender, der dazu bestimmt ist, das Mehrträgersignal zu senden, und dem Empfänger geformt wird, und
   - einen zweiten Satz, der mindestens einen isolierten Piloten (23) enthält, dessen im Zeit-/Frequenz-Raum direkt benachbarte Träger (24) informative Datenelemente lokaler Verfeinerung der ersten Schätzung unter Berücksichtigung eines dem isolierten Piloten nach dem Durchgang im Übertragungskanal zugeordneten komplexen Werts tragen.

13. Vorrichtung zum Senden eines Mehrträgersignals, das aus einer zeitlichen Folge von Symbolen geformt wird, die aus einer Einheit von Datenelementen mit Istwerten bestehen, die enthält:

   - informative Datenelemente, und
   - für mindestens bestimmte der Symbole, Pilot genannte Bezugsdatenelemente, deren Wert und Stelle beim Senden mindestens einem Empfänger bekannt sind, der dazu bestimmt ist, einen Empfang des Mehrträgersignals durchzuführen, wobei jedes der Datenelemente eine Trägerfrequenz des Signals moduliert, wobei eine von einem der Datenelemente modulierte Trägerfrequenz Träger genannt wird,

   **dadurch gekennzeichnet, dass** sie Einrichtungen zur Anwendung von mindestens zwei Sätzen von Datenelementen aus der Einheit von Datenelementen enthält, darunter:

- einen ersten Satz, der mindestens ein Paar von Schätzpiloten eines Übertragungskanals zwischen einem Sender, der dazu bestimmt ist, das Mehrträgersignal zu senden, und dem Empfänger enthält, wobei das Paar von Piloten Piloten entspricht, die in einem Nachbarschaftsbereich lokalisiert sind, in dem der Übertragungskanal als konstant angesehen wird, und
- einen zweiten Satz, der mindestens einen isolierten Piloten (23) enthält, dessen im Zeit-/Frequenz-Raum direkt benachbarte Träger (24) informative Datenelemente lokaler Verfeinerung der ersten Schätzung unter Berücksichtigung eines dem isolierten Piloten nach dem Durchgang im Übertragungskanal zugeordneten komplexen Werts tragen.

**14.** Computerprogrammprodukt, das von einem Kommunikationsnetz heruntergeladen und/oder auf einem computerlesbaren Träger aufgezeichnet und/oder von einem Prozessor ausgeführt werden kann, **dadurch gekennzeichnet, dass** es Programmcodeanweisungen zur Durchführung des Sendeverfahrens nach Anspruch 10 enthält.

**15.** Mehrträgersignal, das aus einer zeitlichen Folge von Symbolen geformt wird, die aus einer Einheit von Datenelementen mit Istwerten bestehen, die enthält:

- informative Datenelemente, und
- für mindestens bestimmte der Symbole, Pilot genannte Bezugsdatenelemente, deren Wert und Stelle beim Senden mindestens einem Empfänger bekannt sind, der dazu bestimmt ist, einen Empfang des Mehrträgersignals durchzuführen, wobei jedes der Datenelemente eine Trägerfrequenz des Signals moduliert, wobei eine von einem der Datenelemente modulierte Trägerfrequenz Träger genannt wird,

**dadurch gekennzeichnet, dass** die Einheit von Datenelementen mit Istwerten enthält:

- mindestens einen ersten Satz von Datenelementen, der eine Präambel enthält, die von mindestens einem Symbol geformt wird, das aus Schätzpiloten eines Übertragungskanals zwischen einem Sender, der dazu bestimmt ist, das Mehrträgersignal zu senden, und dem Empfänger besteht, und
- mindestens einen zweiten Satz von Datenelementen, der mindestens einen isolierten Piloten (23) enthält, dessen im Zeit-/Frequenz-Raum direkt benachbarte Träger (24) informative Datenelemente lokaler Verfeinerung der ersten Schätzung unter Berücksichtigung eines dem isolierten Piloten nach dem Durchgang im Übertragungskanal zugeordneten komplexen Werts tragen.

**16.** Mehrträgersignal, das aus einer zeitlichen Folge von Symbolen geformt wird, die aus einer Einheit von Datenelementen mit Istwerten bestehen, die enthält:

- informative Datenelemente, und
- für mindestens bestimmte der Symbole, Pilot genannte Bezugsdatenelemente, deren Wert und Stelle beim Senden mindestens einem Empfänger bekannt sind, der dazu bestimmt ist, einen Empfang des Mehrträgersignals durchzuführen, wobei jedes der Datenelemente eine Trägerfrequenz des Signals moduliert, wobei eine von einem der Datenelemente modulierte Trägerfrequenz Träger genannt wird,

**dadurch gekennzeichnet, dass** die Einheit von Datenelementen mit Istwerten enthält:

- mindestens einen ersten Satz von Datenelementen, der mindestens ein Paar von Schätzpiloten eines Übertragungskanals zwischen einem Sender, der dazu bestimmt ist, das Mehrträgersignal zu senden, und dem Empfänger enthält, wobei das Paar von Piloten Piloten entspricht, die in einem Nachbarschaftsbereich lokalisiert sind, in dem der Übertragungskanal als konstant angesehen wird, und
- mindestens einen zweiten Satz von Datenelementen, der mindestens einen isolierten Piloten (23) enthält, dessen im Zeit-/Frequenz-Raum direkt benachbarte Träger (24) informative Datenelemente lokaler Verfeinerung der ersten Schätzung unter Berücksichtigung eines dem isolierten Piloten nach dem Durchgang im Übertragungskanal zugeordneten komplexen Werts tragen.

Fig. 1 (Art antérieur)

Fig. 2

y(t)

| | |
|---|---|
| 31 | |

| | |
|---|---|
| 32 | |

| | |
|---|---|
| 33 | |

| | |
|---|---|
| 34 | |

| | |
|---|---|
| 35 | |

<u>Fig. 3</u>

52

P

51 M      Pg 53

<u>Fig. 5A</u>

55

P

54 M      Pg 56

<u>Fig. 5B</u>

27

41  42  43  44$_A$

48$_A$  32

45

46$_A$

47$_A$  36  35  31

Fig. 4A (Art antérieur)

41  42  43  44$_B$

48$_B$  34  45

33  46$_B$

47$_B$  35  32  31

36

Fig. 4B

**EP 2 039 094 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0225884 A